# EUROPÄISCHE PATENTANMELDUNG

(11) **EP 2 993 750 A2**
(43) Veröffentlichungstag der Anmeldung: **09.03.2016**
(21) Anmeldenummer: 15183479.3
(22) Anmeldetag: 02.09.2015
(51) Int. Cl.: H02G 3/18

(54) **RAHMENVORRICHTUNG FÜR EINE FASERMANAGEMENTEINHEIT**

(30) Priorität: 02.09.2014 CH 13262014
(71) Anmelder: Zidatech AG, 4614 Hägendorf (CH)
(72) Erfinder: Wacker, Alfred, CH-5707 Seengen (CH)
(74) Vertreter: Schirbach, Marcel

(57) **Zusammenfassung**

Bei einer Rahmenvorrichtung (37) für eine Fasermanagementeinheit (1) für den Anschluss von Haushalten an ein Glasfasernetz (3), umfasst die Fasermanagementeinheit (1) faseroptische Steckverbinder (6) mit daran angeschlossenen Lichtwellenleitern (30), welche Lichtwellenleiter (30) in ein an der Rahmenvorrichtung (37) fixiertes Glasfaserkabel (20) münden, wobei die Rahmenvorrichtung (37) eine Zentralöffnung (36) aufweist. Die Rahmenvorrichtung (37) ist aus einem elastischen Material gefertigt ist, wodurch ein Abstand einander gegenüber liegender Punkte (A, A'; B, B') an der Rahmenvorrichtung (37) derart vergrösserbar ist, so dass ein elektrischer Doseninhalt (24) einer Hausanschlussdose, umfassend eine mit einer elektrischen Leitung (21) verbundenen Anzahl drahtgebundener Steckverbinder (5), durch die Zentralöffnung (36) steckbar ist.

## Beschreibung

Die vorliegende Erfindung fällt in den Bereich der Hausanschlusstechnik; sie betrifft eine Rahmenvorrichtung für eine Fasermanagementeinheit zum Anschluss von Haushalten an ein Glasfasernetz gemäss dem Oberbegriff des Anspruchs 1.

### Stand der Technik

Konventionelle Fasermanagementeinheiten für den Anschluss von Haushalten an drahtgebundene Netzwerke und/oder lichtwellenleitergebundene Netzwerke sind beispielsweise bekannt aus der EP 2 241 917 A2. Hierin wird eine Unterputzdose mit drahtgebundenen bzw. lichtwellenleitergebundenen Steckverbindern beschrieben. Eine solche Unterputzdose weist eine von einem Rahmen umgebene Restöffnung auf, die von einer Abdeckplatte verschlossen ist, welche mit einem hinter dem Rahmen angeordneten Träger verschraubt ist. Am Träger sind drahtgebundene Steckverbinder befestigt, an denen Adern eines Kupferkabels enden, welche durch Anschlussöffnungen in der Abdeckplatte zugänglich sind. In einer Öffnung am Träger ist ein mit ihm verrasteter Kupplungshalter eingesetzt, der Aufnahmen für faseroptische Steckverbinder aufweist, die durch schräg nach unten gerichtete, durch Schutzkappen verschliessbare weitere Anschlussöffnungen in der Abdeckplatte zugänglich sind.

Eine derartige Ausführungsform, bei der drahtgebundene und lichtwellenleitergebundene Steckverbinder unmittelbar benachbart zueinander angeordnet sind, ist auch als Hybridanschlussdose bekannt. Solche Hybridanschlussdosen sind nicht nur in der Ausführungsform unterputz bekannt, sondern ebenfalls als Aufputzdosen. Ein wesentlicher Vorteil von Hybridanschlussdosen besteht in der Umrüstbarkeit bestehender, drahtgebundener Hausanschlussdosen mit Lichtwellenleiteranschlüssen einer Fasermanagementeinheit. Dabei ist unerheblich, welche drahtgebundene Vorinstallation, wie beispielsweise für Telefonie, Internet, Energieversorgung oder Radio-/Fernsehen, vorliegt. Für die Nachrüstung mit Fasermanagementeinheiten müssen die Doseninhalte einer Unterputzdose bzw. einer Aufputzdose vollständig ausgetauscht und mit einer neuen Aussenabdeckung versehen werden, wobei die bisher lediglich drahtführenden Leerrohre zu dieser Hausanschlussdose anschliessend gemeinsam mit neu hinzukommenden Glasfaserkabeln genutzt werden. Ein Vorteil dieser Umrüstung zeigt sich darin, dass sich die Bearbeitung einer Wandstruktur zwecks Installation einer weiteren -gegebenenfalls nebengeordneten- Hausanschlussdose für faseroptische Steckverbinder erübrigt. Für die Installation einer Hybridanschlussdose wird ein bestehender, drahtgebundener Doseninhalt einer konventionellen Hausanschlussdose entfernt, wobei die Drahtverbindungen von diesem Doseninhalt getrennt werden müssen; anschliessend werden die Drahtverbindungen an einem Hybridanschlussdoseninhalt wieder aufgelegt und die neue Hausanschlussdose weist dann sowohl elektrische sowie faseroptische Steckverbinder auf. Der Doseninhalt für die drahtgebundene Vorinstallationen wird somit ausser Betrieb genommen, obwohl dieser Doseninhalt weiterhin funktionsfähig wäre.

Eine in Hybridanschlussdosen zum Einsatz gelangende Fasermanagementeinheit umfasst faseroptische Steckverbinder und daran angeschlossene Lichtwellenleiter, welche Lichtwellenleiter mit einer Überlänge als Reserve in ein Glasfaserkabel münden. Das Glasfaserkabel ist dann geeignet, in einem Leerrohr zu einem Glasfaserhausübergabepunkt geführt zu werden. Dabei ist vorgesehen, dieses Glasfaserkabel in seiner Länge vorab zu konfektionieren, damit bei der Hausinstallation kein Montageaufwand an den optischen Einrichtungen vorgenommen werden muss.

Wie bereits oben erwähnt sind zwischen den faseroptischen Steckverbindern und dem Glasfaserkabel die Lichtwellenleiter mit einer Überlänge ausgeführt, damit in Abhängigkeit vom Installationsort gegebenenfalls diese Überlänge als eine Reserve genutzt werden kann. Diese Überlänge der Lichtwellenleiter ist typischerweise in einem Reserveraum der Fasermanagementeinheit spulenförmig aufgewickelt, wobei ein möglichst grosser Biegeradius für die Lichtwellenleiter bereitgestellt wird. Denkbar ist auch, dass ein im Radius kleinerer Reserveraum für die Überlänge der Lichtwellenleiter beispielsweise in einer Ecke der Hybridanschlussdose angeordnet ist; in einer solchen Ausführungsform müssten die Lichtwellenleiter allerdings mit einem kleineren Biegeradius aufgespult werden; Zulassungsrichtlinien bestimmen bzw. beschränken an dieser Stelle die Einsatzmöglichkeiten kleinerer Reserveräume.

In bekannten Hybridanschlussdosen ist die Fasermanagementeinheit in einer Rahmenvorrichtung angeordnet; diese Rahmenvorrichtung trägt dabei die faseroptischen Steckverbinder mit den daran angeschlossenen Lichtwellenleitern und deren Überlänge als Reserve-Lichtwellenleiter, die im bereits erwähnten Reserveraum in der Rahmenvorrichtung spulenartig aufgewickelt ist. Abgehend von dieser Rahmenvorrichtung ist das Glasfaserkabel, in welches die Lichtwellenleiter münden, fixiert. Zudem umfasst die Rahmenvorrichtung die einsatzbedingten Teile der drahtgebundenen Steckverbinder.

Die bereits oben erörterte Vorkonfektionierung wird unmittelbar bei der Produktion eines Hybridanschlussdoseninhalts vorgenommen, weil hier produktionsseitig Laborbedingungen hinsichtlich Reinheit und Präzision für den Aufbau der kompletten faseroptischen Einheit vorliegen und keine staubigen Baubedingungen wie bei einer Wandinstallation unterputz oder aufputz. Regelmässig werden demzufolge drahtgebundene Doseninhalte durch Hybridanschlussdoseninhalte ersetzt, wobei sämtliche Drahtverbindung von den ursprünglichen Doseninhalten getrennt und in den Hybridanschlussdoseninhalten neu aufgelegt werden müssen und die vorkonfektionierten faseroptischen Elemente der Hybridanschlussdoseninhalte mit daran angeschlossenen Glasfaserkabeln dabei unberührt verbleiben.

Als nachteilig kann bei dieser Art der Umrüstung von vorhandenen drahtführenden Aufputzdosen oder Unterputzdosen mit einer Fasermanagementeinheit an einer Rahmenvorrichtung der Ersatz der gesamten drahtgebundenen Doseninhalte angesehen werden und darüber hinaus das Ab- und Anklemmen aller Drahtverbindungen.

### Darstellung der Erfindung

Es ist deshalb Aufgabe der vorliegenden Erfindung, eine Rahmenvorrichtung für eine Fasermanagementeinheit der beschriebenen Art dahingehend weiterzuentwickeln, so dass eine Nachrüstung einer bestehenden, drahtgebundenen Hausanschlussdose (unterputz/aufputz) mit einer vorkonfektionierten Fasermanagementeinheit mit vergleichsweise gegenüber dem Stand der Technik geringerem Aufwand hinsichtlich der Montage und dem Austausch von bestehenden drahtgebundenen Installationen erfolgen kann.

Die der Erfindung für die Fasermanagementeinheit zugrunde liegende Aufgabe wird gelöst durch die Merkmale des Anspruchs 1; die diesen Erfindungsgedanken weiterbildenden Merkmale sind Gegenstand der Unteransprüche 2 bis 9.

Der Kern der Erfindung ist darin zu sehen, dass eine Rahmenvorrichtung für eine Fasermanagementeinheit für den Anschluss von Haushalten an ein Glasfasernetz aus einem elastischen Material gefertigt ist, wobei die Fasermanagementeinheit faseroptische Steckverbinder mit daran angeschlossenen Lichtwellenleitern umfasst und die Lichtwellenleiter in ein an der Rahmenvorrichtung fixiertes Glasfaserkabel münden, wobei die Rahmenvorrichtung eine Zentralöffnung aufweist und wobei aufgrund des elastischen Materials ein Abstand einander gegenüberliegender Punkte an der Rahmenvorrichtung derart vergrösserbar ist, so dass ein elektrischer Doseninhalt einer Hausanschlussdose, umfassend eine mit einer elektrischen Leitung verbundenen Anzahl drahtgebundener Steckverbinder, durch die Zentralöffnung steckbar ist.

Der Vorteil der Erfindung zeigt sich vor allem darin, dass die vollständig vorkonfektionierte und aus einem elastischen Material gefertigte Rahmenvorrichtung für eine Fasermanagementeinheit derart verformbar ist, dass ein verdrahteter, vorinstallierter Doseninhalt einer Hausanschlussdose durch die Zentralöffnung der Rahmenvorrichtung hindurchführbar ist; in Ruhestellung weist die Zentralöffnung der Rahmenvorrichtung eine Grösse auf, die ein Hindurchführen eines verdrahteten Doseninhalts nicht ermöglichen würden. Erst mit Verformen der Rahmenvorrichtung erweitert sich die Zentralöffnung derart, dass der verdrahtete Doseninhalt hindurchführbar ist.

Besonders vorteilhaft an der erfindungsgemässen Rahmenvorrichtung ist, dass hiermit erstmals die Installation einer Fasermanagementeinheit als Nachrüstung ermöglicht wird, wobei am Installationsort alle Leitungen, namentlich die elektrischen Leitungen eines vorinstallierten Doseninhalts und die faseroptischen Leitungen, wie Lichtwellenleiter oder Glasfaserkabel, im angeschlossenen Zustand verbleiben können und zudem der drahtgebundene Doseninhalt vollständig erhalten und in Betrieb bleibt. Herauszuheben sind somit der geringere Montageaufwand am Ort der Installation und dass die vorinstallierten, drahtgebundenen Doseninhalte nicht ausgetauscht werden müssen.

Eine erfindungsgemässe Ausführungsform weist eine viereckige Rahmenvorrichtung auf, die als Gehäuserahmen oder als Innenrahmen ausgebildet ist, wobei der Gehäuserahmen bzw. der Innenrahmen die Zentralöffnung vollständig umschliesst; an einander paarweise diagonal gegenüberliegenden Punkten dieser Ausführungsform ist die elastische Rahmenvorrichtung derart für die Installation manipulierbar, dass die Zentralöffnung hinsichtlich ihrer Durchsteckweite für drahtgebundene Doseninhalte vergrösserbar ist.

Bei einer weiteren erfindungsgemässen Ausführungsform weist eine viereckige Rahmenvorrichtung einen Gehäuserahmen auf, der die Zentralöffnung lediglich teilweise umschliesst, wobei der Gehäuserahmen mittels einer Schliessplatte schliessbar ist und eine Biegestelle aufweist; an einander paarweise diagonal gegenüberliegenden Punkten dieser Ausführungsform ist die elastische Rahmenvorrichtung an ihrer Biegestelle derart für die Installation manipulierbar, dass die Zentralöffnung hinsichtlich ihrer Durchsteckweite für drahtgebundene Doseninhalte vergrösserbar ist.

Weitere Vorteile zeigen sich im Folgenden in der Beschreibung der erfinderischen Ausführungsformen.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen versehen. An dieser Stelle wird darauf hingewiesen, dass die Figuren keinerlei einschränkende Wirkung auf den Erfindungsgegenstand haben, sondern lediglich mögliche Ausführungsformen des Erfindungsgedankens darstellen.

Es zeigen rein schematisch die
- Fig. 1: eine Explosivdarstellung einer erfindungsgemässen Rahmenvorrichtung für eine Fasermanagementeinheit, wobei diese Rahmenvorrichtung als Gehäuserahmen ausgebildet ist;
- Fig. 2: eine Explosivdarstellung eines Einlasskastens und eines TV-Doseninhalts;
- Fig. 3: eine Darstellung wie in Fig. 2 mit einer Montageplatte für eine Fasermanagementeinheit (nicht gezeigt);
- Fig. 4: den elastisch verformten Gehäuserahmen gemäss Fig. 1;
- Fig. 5: den Gehäuserahmen in Montageposition;
- Fig. 6: eine Hybridanschlussdose mit elektrischen und faseroptischen Steckverbindern;
- Fig. 7: eine Explosivdarstellung einer weiteren Ausführungsform der erfindungsgemässen Rahmenvorrichtung für eine Fasermanagementeinheit, wobei diese Rahmenvorrichtung als Innenrahmen ausgebildet ist;
- Fig. 8: den elastisch verformten Innenrahmen gemäss Fig. 7;
- Fig. 9: eine weitere Ausführungsform der erfindungsgemässen Rahmenvorrichtung für eine Fasermanagementeinheit, wobei die Rahmenvorrichtung als Gehäuserahmen mit einer Ausnehmung ausgebildet ist;
- Fig. 10: den elastisch verformten Gehäuserahmen gemäss Fig. 9, und
- Fig. 11: den montierten Gehäuserahmen gemäss Fig. 9.

### Wege zur Ausführung der Erfindung

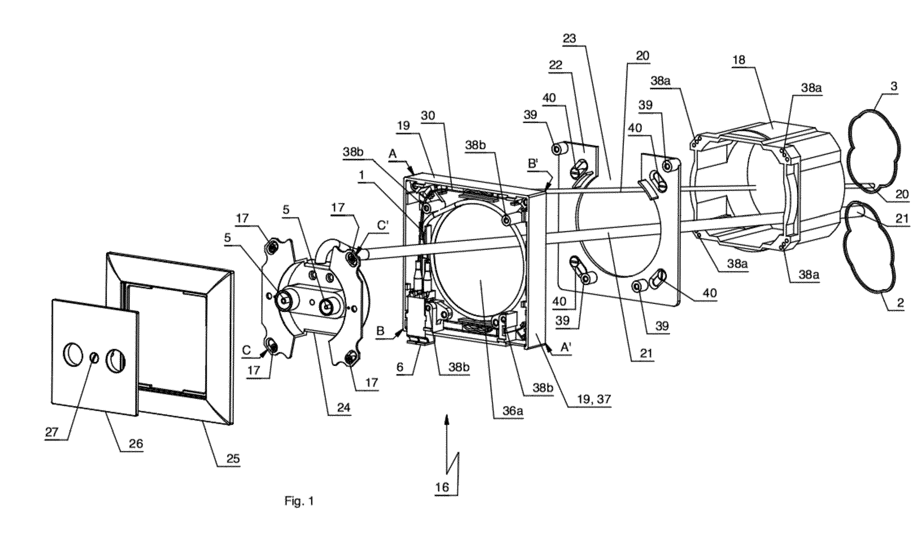

In Fig. 1 ist in einer Explosivdarstellung eine Hybridanschlussdose 16 gezeigt, umfassend die beiden wesentlichen elektrischen und faseroptischen Anschlüsse, vorliegend ein TV-Doseninhalt 24 mit drahtgebundenen Anschlüssen bzw. Steckverbindern 5 und eine erfindungsgemässe Rahmenvorrichtung 37 für eine Fasermanagementeinheit 1 mit lichtwellenleitergebundenen Anschlüssen bzw. Steckverbindern 6. Die Hybridanschlussdose 16 weist ausgehend von einem Einlasskasten 18 in einer Mauer (hier nicht dargestellt) nach aussen zunächst eine Montageplatte 22 auf, dann die Rahmenvorrichtung 37 mit der Fasermanagementeinheit 1, den TV-Doseninhalt 24 und abschliessend einen Abdeckrahmen 25, der mittels einer Abdeckplatte 26 verschlossen ist, wobei eine Schraube 27 die Abdeckplatte 26 mit dem TV-Doseninhalt 24 verbindet.

Eine erste Ausführungsform der erfindungsgemässen Rahmenvorrichtung 37 für die Fasermanagementeinheit 1 zeigt diese Rahmenvorrichtung 37 als einen Gehäuserahmen 19, der von aussen betrachtet eine quadratische und in sich geschlossene Rahmenstruktur aufweist und mit den lichtwellenleitergebundenen Anschlüssen bzw. Steckverbindern 6 versehen ist. Im Innern des Gehäuserahmens 19 ist die gesamte, vorkonfektionierte Fasermanagementeinheit 1 angeordnet; diese vorkonfektionierte Fasermanagementeinheit 1 weist neben den lichtwellenleitergebundene Anschlüssen 6 die damit verbundenen Lichtwellenleiter 30 auf, wobei diese Lichtwellenleiter 30 gemeinsam in ein Glasfaserkabel 20 münden. Die Fasermanagementeinheit 1 ist im Innern des Gehäuserahmens 19 um eine Zentralöffnung 36a dieses Gehäuserahmens 19 angeordnet. Um diese Zentralöffnung 36a sind ferner eine Anzahl Innengewinde 38b vorgesehen, an welchen der TV-Doseninhalt 24 verschraubbar ist; für diesen Zweck ist der TV-Doseninhalt 24 mit Bohrungen 17 ausgestattet.

Die Montageplatte 22 zeigt eine Öffnung 23, mit der diese Montageplatte 22 über eine mit dem TV-Doseninhalt 24 verdrahtete elektrische Leitung 21 im angeschlossenen Betriebszustand führbar ist. Eine Anzahl Bohrungen 40 an der Montageplatte 22 sind fluchtend zu einer Anzahl Innengewinde 38a des Einlasskastens 18 angeordnet, so dass die Montageplatte 22 mit dem Einlasskasten 18 verschraubbar ist; ferner ist an einer Anzahl Innengewinde 39 der Montageplatte 22 die Rahmenvorrichtung 37 verschraubbar.

Die mit den drahtgebundenen Anschlüssen 5 verbundene elektrische Leitung 21 führt durch die Zentralöffnung 36a der Rahmenvorrichtung 37 mittig durch die Montageplatte 22 und den Einlasskasten 18 zu einem drahtgebundenen Netzwerk 2; des Weiteren führt das Glasfaserkabel 20 ebenfalls zentral durch die Montageplatte 22 und den Einlasskasten 18 zu einem lichtwellenleitergebundenen Netzwerk 3. Zwischen dem Einlasskastens 18 und dem drahtgebundenen Netzwerk 2 bzw. dem lichtwellenleitergebundenen Netzwerk 3 sind die elektrische Leitung 21 und das Glasfaserkabel 20 parallel -beispielsweise in einem hier nicht gezeigten Leerrohr- zu jeweiligen Hausübergabepunkten (hier nicht dargestellt) geleitet.

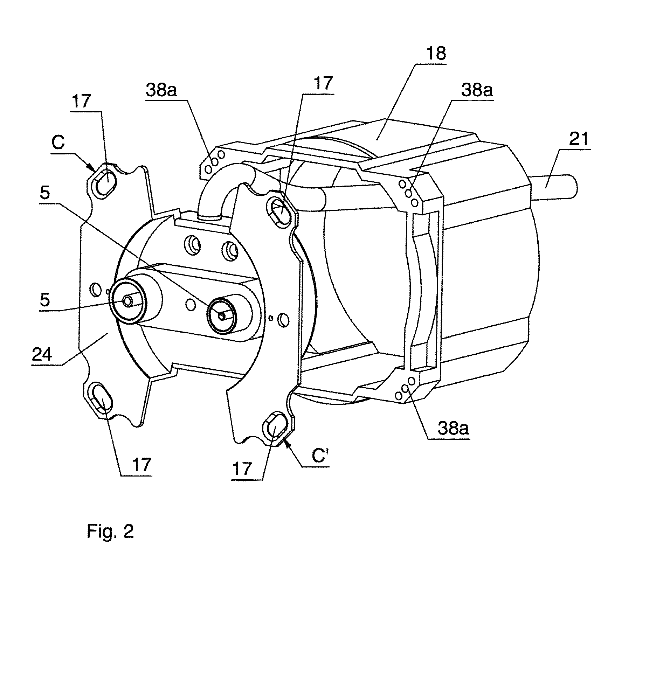

Fig. 2 zeigt eine Explosivdarstellung eines Einlasskastens 18, der in einer reinen konventionellen Installation lediglich mit elektrischen Anschlüssen 5 des TV-Doseninhalts 24 ausgestattet ist, wobei diese Anschlüsse 5 vorliegend im Betriebszustand mit der elektrischen Leitung 21 verbunden sind. Diese Darstellung erhellt, dass die Bohrungen 17 des TV-Doseninhalts 24 zwecks Montage fluchtend zu Innengewinden 38a des Einlasskastens 18 angeordnet sind. Die grösste geometrische Abmessung weist der 24 TV-Doseninhalt über ein Paar seiner diagonalen Ecken C, C' auf, die einen grösseren Abstand als einander diagonal gegenüberliegende Bohrungen 17 des TV-Doseninhalts 24 voneinander aufweisen.

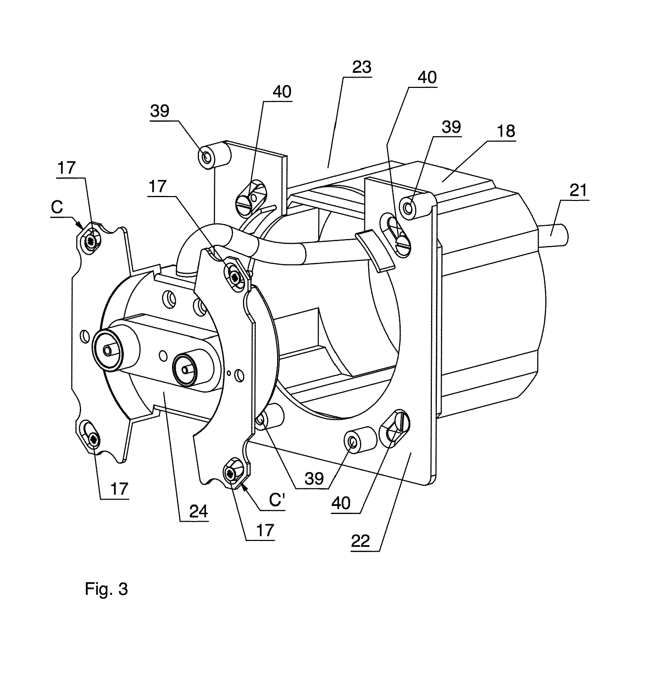

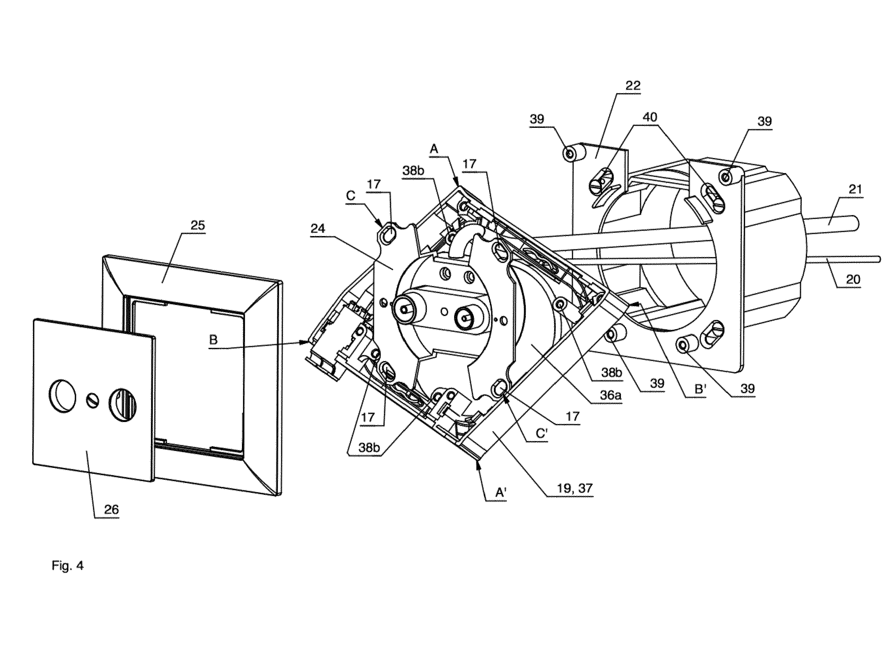

Vorbereitend für eine Erweiterung einer konventionellen Hausanschlussdose mit einem TV-Doseninhalt 24 -wie in Fig. 2 offenbart- zu einer Hybridanschlussdose 16 -siehe Fig. 1- wird die Montageplatte 22 mit ihren zu den Innengewinden 38a des Einlasskastens 18 fluchtenden Bohrungen 40 verschraubt, siehe Fig. 3. Die Montageplatte 22 weist Innengewinde 39 auf, an welchen die Rahmenvorrichtung 37 bzw. in der vorliegenden Ausführungsform der Gehäuserahmen 19 verschraubbar ist. Bevor die Rahmenvorrichtung 37 mit der Montageplatte 22 verbunden werden kann, wird der TV-Doseninhalt 24 durch die Zentralöffnung 36a des Gehäuserahmens 19 (37) geführt, wie in Fig. 4 gezeigt.

Die Zentralöffnung 36a des Gehäuserahmens 19 weist in Ruhestellung einen kleineren, im Wesentlichen kreisrunden Durchmesser auf als die grösste geometrische Abmessung einander gegenüberliegender Punkte C, C' des TV-Doseninhalts 24. Erst wenn der Gehäuserahmen 19 -der erfindungsgemäss aus einem elastischen Material gefertigt ist- an seinen einander gegenüberliegenden Ecken A, A' (oder B, B') zusammengedrückt wird, nimmt die in Ruhestellung im Wesentlichen kreisrunde Zentralöffnung 36a des Gehäuserahmens 19 eine elliptische Form an, wobei eine Hauptachse dieser elliptischen Form dann grösser ist als der Abstand der einander gegenüberliegenden Punkte C, C' des TV-Doseninhalts 24, womit der TV-Doseninhalt 24 -der weiterhin mit der elektrischen Leitung 21 verbunden ist- durch die Zentralöffnung 36a des Gehäuserahmens 19 mit der vollständig vorkonfektionierten Fasermanagementeinheit 1 hindurchführbar ist. Nach dem Hindurchführen und Freigabe der gegenüberliegenden Ecken A, A' (oder B, B') nimmt der Gehäuserahmen 19 seine ursprüngliche Form in Ruhestellung wieder an und das Glasfaserkabel 20 der Fasermanagementeinheit 1 am Gehäuserahmen 19 ist parallel zur elektrischen Leitung 21 im Einlasskasten 18 angeordnet und abgehend davon verlegbar.

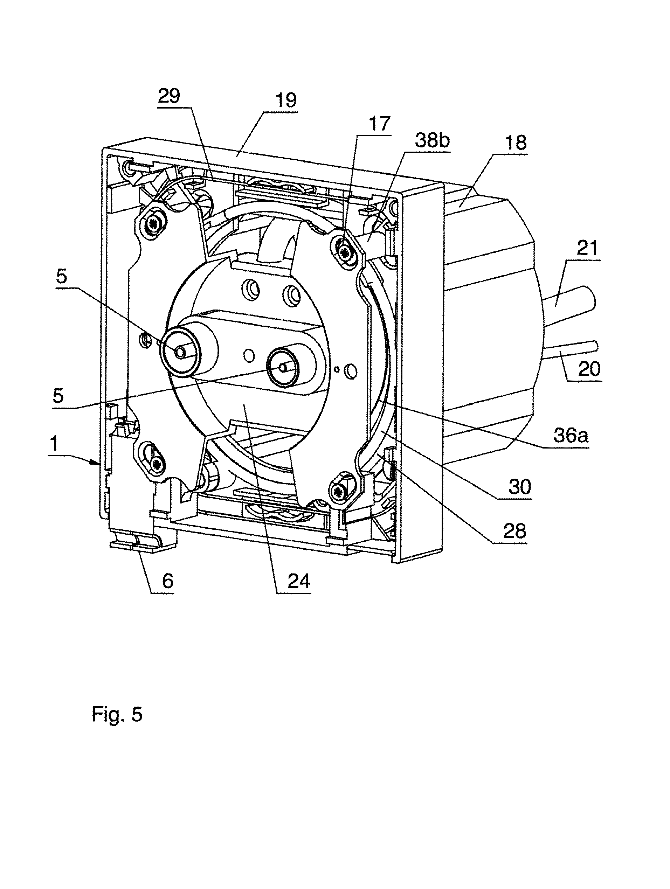

Die Innengewinde 38b am Gehäuserahmen 19 weisen eine gleiche Beabstandung wie die Innengewinde 38a am Einlasskasten 18 auf und sind ebenfalls dafür vorgesehen, dass der TV-Doseninhalt 24 mit seinen Bohrungen 17 an diesen Innengewinden 38b des Gehäuserahmens 19 verschraubt werden kann; die Fig. 4 und 5 stellen diese Installation dar.

Ferner zeigt die Fig. 5 ein weiteres, wesentliches Detail der vorkonfektionierten Fasermanagementeinheit 1, namentlich einen Reserveraum 28 mit Reserve-Lichtwellenleiter 29 der Lichtwellenleiter 30, die um die Zentralöffnung 36a des Gehäuserahmens 19 mit einem vorbestimmten Radius gewickelt sind. Diese Reserve-Lichtwellenleiter 29 werden beispielsweise genutzt in Abhängigkeit vom Längenbedarf am Installationsort oder im Bedarfsfall für eine Erneuerung der Verbindung zu den Steckverbindern 6.

Der elektrisch installierte TV-Doseninhalt 24 wird konsequenterweise beim Hindurchführen durch den Gehäuserahmen 19 auch durch die aufgewickelten Reserve-Lichtwellenleiter 29 der vorkonfektionierten Fasermanagementeinheit 1 geführt.

Die vorliegende erfindungsgemässe Rahmenvorrichtung 37, bestehend aus elastischem Material in der Ausführungsform als Gehäuserahmen 19, ermöglicht erstmals die Erweiterung konventioneller Hausanschlussdosen mit einem drahtgebundenen TV-Doseninhalt 24 zu einer Hybridanschlussdose 16 mit einer vollständig vorkonfektionierten Fasermanagementeinheit 1, ohne dass der TV-Doseninhalt 24 von seiner elektrischen Leitung 21 oder die Fasermanagementeinheit 1 von ihrem Glasfaserkabel 20 getrennt werden muss.

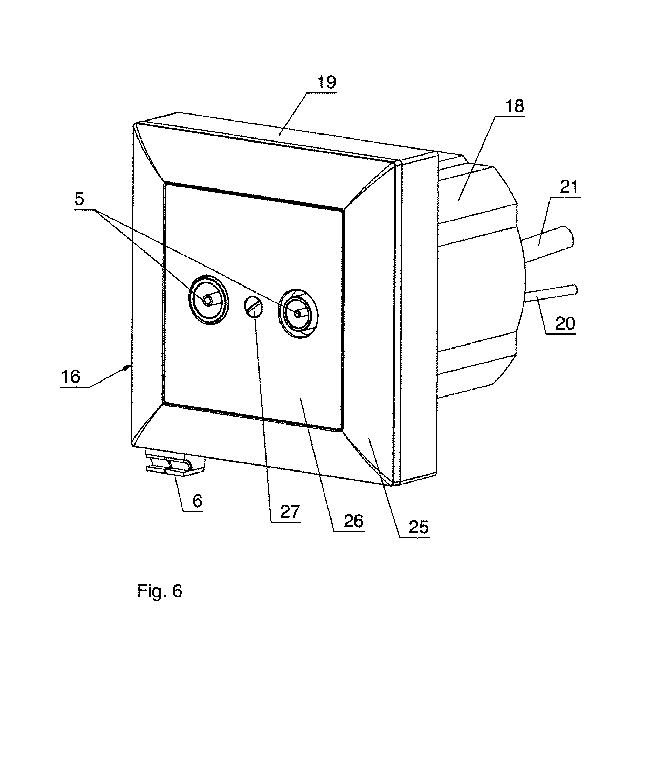

Fig. 6 zeigt in einer perspektivischen Darstellung die vollständig installierte Hausanschlussdose vorliegend als Hybridanschlussdose 16. Diese ist mit dem Abdeckrahmen 25 und der Abdeckplatte 26 mittels Schraube 27 verschlossen und zeigt nach aussen die lichtwellenleitergebundenen Anschlüsse 6 und die drahtgebundenen Anschlüsse 5.

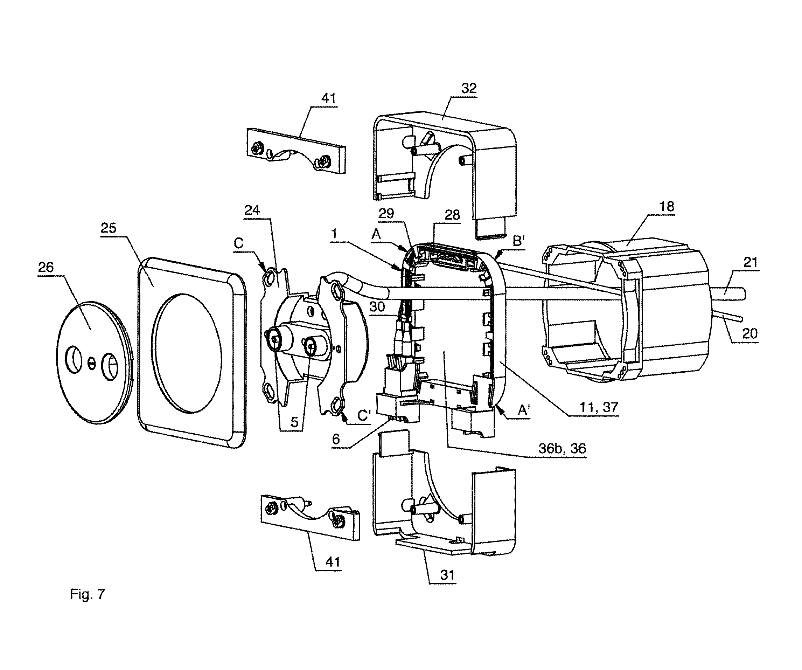

In Fig. 7 ist in einer Explosivdarstellung eine weitere Ausführungsform der erfindungsgemässen Rahmenvorrichtung 37 für eine Fasermanagementeinheit 1 dargestellt. Unverändert umfasst hier die Hybridanschlussdose 16 ebenfalls den Einlasskasten 18, den drahtgebundenen Doseninhalt -beispielhaft gezeigt in Form des TV-Doseninhalts 24, welcher an den elektrischen Steckverbindern 5 mit der elektrischen Leitung 21 verbunden ist, und ferner den mittels Abdeckplatte 26 verschlossenen Abdeckrahmen 25. Neu an der vorliegenden Ausführungsform ist die Rahmenvorrichtung 37 für die Fasermanagementeinheit 1, welche Rahmenvorrichtung 37 als ein Innenrahmen 11 ausgestaltet ist. An diesem Innenrahmen 11 ist die Fasermanagementeinheit 1 vollständig vorkonfektioniert angeordnet, namentlich mit den an Lichtwellenleitern 30 angeschlossenen faseroptischen Steckverbindern 6, den Reserve-Lichtwellenleitern 29 in dem Reserveraum 28, welcher Reserveraum 28 die Zentralöffnung 36 in der Rahmenvorrichtung 37 bzw. die Zentralöffnung 36b im Innenrahmen 11 umgibt und abschliessend das Glasfaserkabel 20, welches parallel zur elektrischen Leitung 21 durch den Einlasskasten 18 verlegt ist.

Nach aussen ist der Innenrahmen 11 umgeben von einem Gehäuseunterteil 31 und einem Gehäuseoberteil 32, womit der Innenrahmen 11 am Einlasskasten 18 verschraubbar ist. Ein Paar Halter 41 dienen dazu, den TV-Doseninhalt 24 mit dem Gehäuseunterteil 31 und dem Gehäuseoberteil 32 zu verbinden. Die Ecken des im Wesentlichen quadratischen und in sich geschlossenen Innenrahmens 11 sind diagonal einander gegenüberliegend mit A, A' bzw. B, B' bezeichnet und die äusseren Ecken des TV-Doseninhalts mit C, C'.

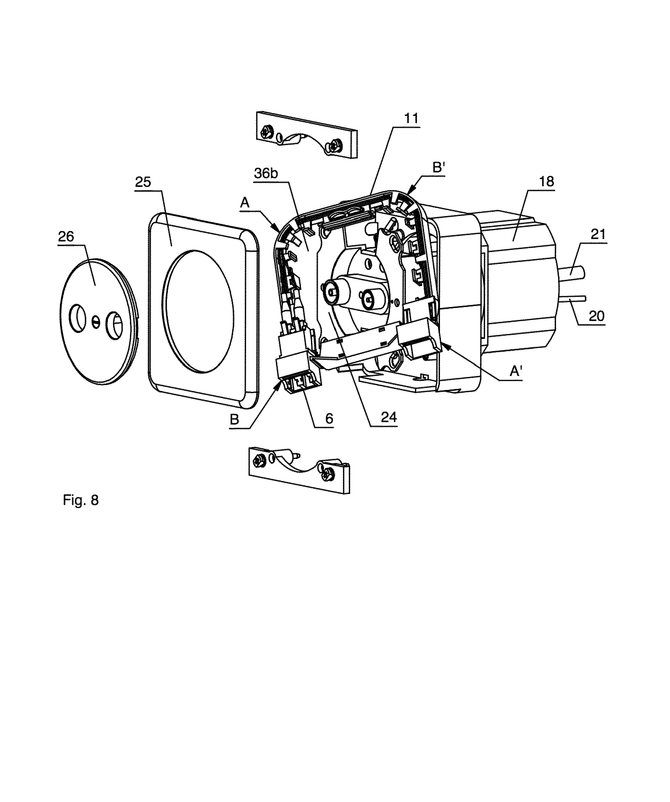

Im Sinn der vorliegenden Erfindung ist der Innenrahmen 11 ebenfalls aus einem elastischen Material gefertigt. Fig. 8 erhellt, dass der Innenrahmen 11 mittels Druck auf die einander gegenüberliegenden Ecken A, A' oder B, B' verformbar ist. Dabei verformt sich die Zentralöffnung 36b ebenfalls, und zwar in der Weise, dass der TV-Doseninhalt 24 über seine Ecken C, C' hindurchführbar ist, während die elektrische Leitung 21 an diesem TV-Doseninhalt 24 und das Glasfaserkabel 20 an dem Innenrahmen 11 angeschlossen verbleiben.

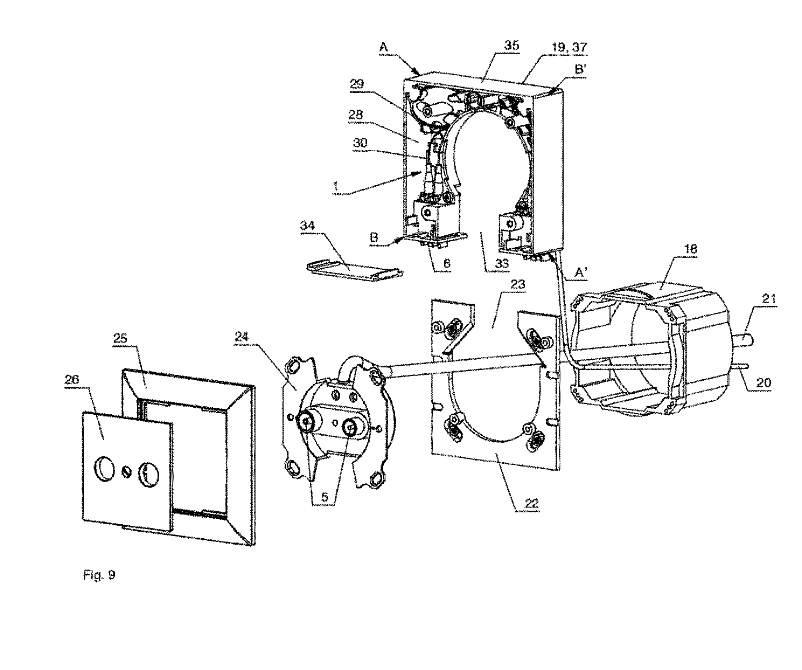

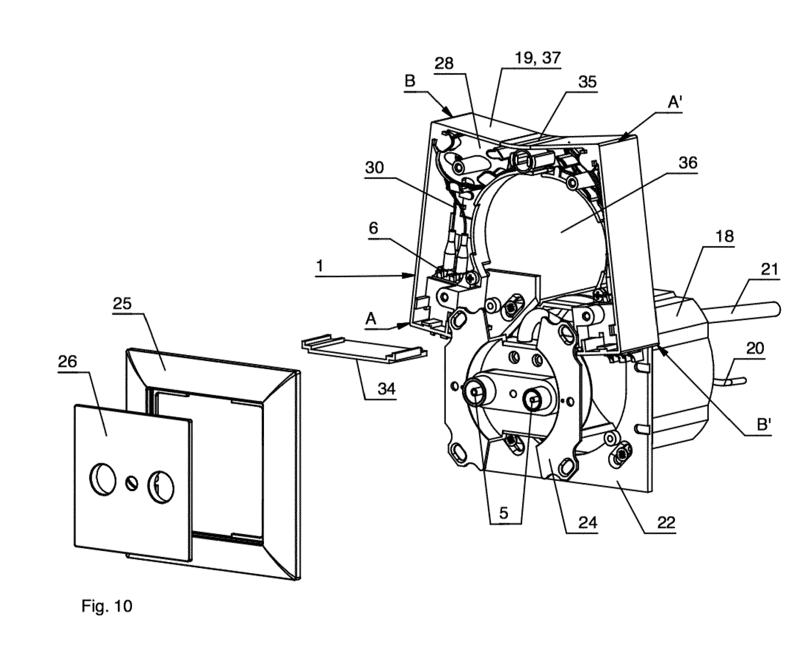

Eine weitere Ausführungsform gemäss vorliegender Erfindung kann Fig. 9 in einer weiteren Explosivdarstellung entnommen werden. Aus einer der vorangestellten Ausführungsformen ist der Einlasskasten 18 bekannt, die Montageplatte 22, ferner der drahtgebundene Doseninhalt -beispielhaft gezeigt in Form des TV-Doseninhalts 24, welcher an den elektrischen Steckverbindern 5 mit der elektrischen Leitung 21 verbunden ist und der mittels Abdeckplatte 26 verschlossene Abdeckrahmen 25. Neu an der vorliegenden Ausführungsform ist die Rahmenvorrichtung 37 für die Fasermanagementeinheit 1, welche Rahmenvorrichtung 37 als ein in sich nicht vollständig verschlossener Gehäuserahmen 19 mit einer Ausnehmung 33 ausgebildet ist, welche Ausnehmung 33 mit einer Schliessplatte 34 geschlossen werden kann. Am Gehäuserahmen 19 ist die Fasermanagementeinheit 1 vollständig vorkonfektioniert angeordnet. Da vorliegend der Gehäuserahmen 19 eine Ausnehmung 33 aufweist, ist -im Unterschied zu beiden obigen Ausführungsformen- der Reserveraum 28 für die Reserve-Lichtwellenleiter 29 der Zentralöffnung 36 nebengeordnet, und zwar in einer Ecke des Gehäuserahmens 19; die im Vergleich zu Fig. 9 leicht vergrösserte Darstellung in Fig. 10 hebt diese Anordnung des Reserveraums 28 hervor. Wegen der hier vorliegenden Platzverhältnisse sind die Reserve-Lichtwellenleiter 29 mit einem kleineren Radius spulenartig aufgewickelt als in den oben beschriebenen Ausführungsformen.

Des Weiteren zeigt Fig. 10, wie der erfindungsgemäss aus einem elastischen Material gefertigte Gehäuserahmen 19 verformbar ist. Aufgrund seiner Elastizität ist der Gehäuserahmen 19 an einer Biegestelle 35 derart verformbar, dass sich der Abstand zwischen den mit A, A' bzw. B, B' bezeichneten Ecken des Gehäuserahmens 19 vergrössert und die Ausnehmung 33 sich so erweitert, so dass der TV-Doseninhalt 24 in die Zentralöffnung 36 des Gehäuserahmens 19 führbar ist.

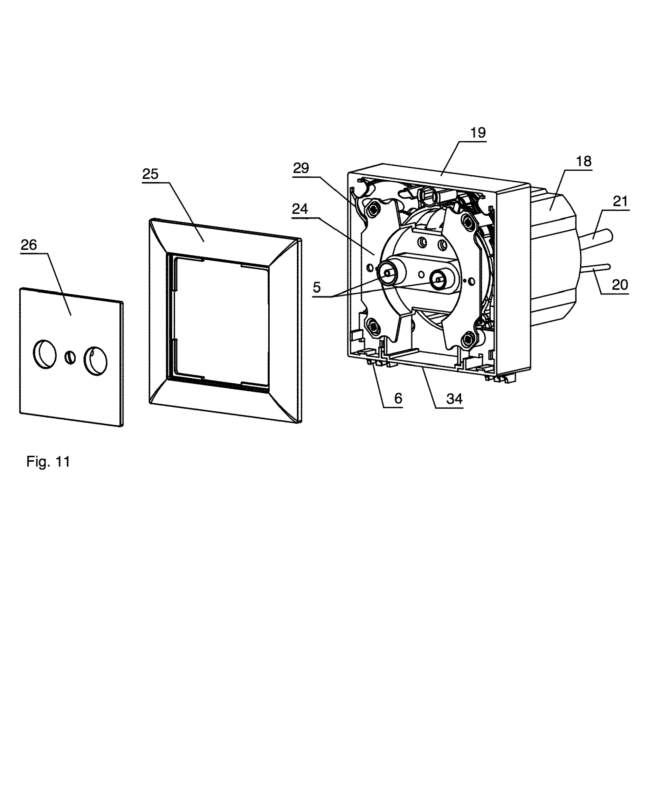

Fig. 11 zeigt diese Ausführungsform des Gehäuserahmens 19 mit eingesetzter Schliessplatte 34 und am Gehäuserahmen 19 verschraubtem TV-Doseninhalt 24. Ausserhalb des Gehäuserahmens 19 sind die elektrischen Steckverbinder 5 sowie die faseroptischen Steckverbinder 6 auch nach Montage des Abdeckrahmens 25 und der Abdeckplatte 26 frei zugänglich.

### Bezugszeichenliste

- 1: Fasermanagementeinheit mit
- 2: drahtgebundene Netzwerke
- 3: lichtwellenleitergebundene Netzwerke / Glasfasernetz
- 4: Unterputzdose
- 5: drahtgebundene Anschlüsse / elektrische Steckverbinder
- 6: lichtwellenleitergebundene Anschlüsse / faseroptische Steckverbinder
- 7: Rahmen
- 8: Restöffnung in Rahmen 7
- 9: Abdeckplatte
- 10: Träger
- 11: Innenrahmen für Fasermanagementeinheit
- 12: Anschlussöffnungen
- 13: Öffnung am Träger 10
- 14: Kupplungshalter
- 15: Schutzkappen
- 16: Hybridanschlussdose
- 17: Bohrung
- 18: Einlasskasten
- 19: Gehäuserahmen für Fasermanagementeinheit
- 20: Glasfaserkabel (FTTH)
- 21: elektrische Leitung
- 22: Montageplatte
- 23: Öffnung in Montageplatte
- 24: drahtgebundener Doseninhalt; TV-Doseninhalt
- 25: Abdeckrahmen
- 26: Abdeckplatte
- 27: Schraube
- 28: Reserveraum
- 29: Reserve-Lichtwellenleiter
- 30: Lichtwellenleiter
- 31: Gehäuseunterteil
- 32: Gehäuseoberteil
- 33: Ausnehmung in Gehäuserahmen mit integrierter Fasermanagementeinheit mit
- 34: Schliessplatte für Ausnehmung 33
- 35: Biegestelle in Gehäuserahmen 19
- 36: Zentralöffnung in Rahmenvorrichtung 37
- 36a: Zentralöffnung in Gehäuserahmen 19
- 36b: Zentralöffnung in Innenrahmen 11
- 37: Rahmenvorrichtung
- 38a, b: Innengewinde für Montage von Doseninhalt 24
- 39: Innengewinde für Montage Rahmenvorrichtung 19
- 40: Bohrung in Montageplatte 22
- 41: Halter
- A, A': gegenüberliegende Punkte einer ersten Diagonalachse
- A-A': erste Diagonalachse
- B, B': gegenüberliegende Punkte einer zweiten Diagonalachse
- B-B': zweite Diagonalachse
- C, C': gegenüberliegende Punkte einer dritten Diagonalachse
- C-C': dritte Diagonalachse

## Patentansprüche

1. Rahmenvorrichtung (37) für eine Fasermanagementeinheit (1) für den Anschluss von Haushalten an ein Glasfasernetz (3), wobei die Fasermanagementeinheit (1) faseroptische Steckverbinder (6) mit daran angeschlossenen Lichtwellenleitern (30) umfasst, welche Lichtwellenleiter (30) in ein an der Rahmenvorrichtung (37) fixiertes Glasfaserkabel (20) münden und die Rahmenvorrichtung (37) eine Zentralöffnung (36) aufweist, **dadurch gekennzeichnet, dass** die Rahmenvorrichtung (37) aus einem elastischen Material gefertigt ist, wodurch ein Abstand einander gegenüber liegender Punkte (A, A'; B, B') an der Rahmenvorrichtung (37) derart vergrösserbar ist, so dass ein elektrischer Doseninhalt (24) einer Hausanschlussdose, umfassend eine mit einer elektrischen Leitung (21) verbundenen Anzahl drahtgebundener Steckverbinder (5), durch die Zentralöffnung (36) steckbar ist.

2. Rahmenvorrichtung (37) nach Anspruch 1, **dadurch gekennzeichnet, dass** die Rahmenvorrichtung (37) viereckig ausgebildet ist und die einander gegenüberliegenden Punkte (A, A'; B, B') die äusseren Eckpunkte der Rahmenvorrichtung (37) bilden, die einander diagonal gegenüberliegen.

3. Rahmenvorrichtung nach einem der Ansprüche 1 oder 2, **dadurch gekennzeichnet, dass** Reserve-Lichtwellenleiter (29) der Lichtwellenleiter (30) zwischen den faseroptischen Steckverbindern (6) und dem Glasfaserkabel (20) in einem Reserveraum (28) an der Rahmenvorrichtung (37) spulenartig aufgewickelt sind.

4. Rahmenvorrichtung (37) nach Anspruch 3, **dadurch gekennzeichnet, dass** die Rahmenvorrichtung (37) als Gehäuserahmen (19) oder als Innenrahmen (11) ausgebildet ist, wobei der Gehäuserahmen (19) bzw. der Innenrahmen (11) die Zentralöffnung (36) vollständig umschliesst.

5. Rahmenvorrichtung (37) nach Anspruch 4, **dadurch gekennzeichnet, dass** eine erste Diagonalachse (A-A') der Rahmenvorrichtung (37) zwischen einander gegenüberliegenden Punkten (A, A') verkleinerbar ist, wobei eine zweite Diagonalachse (B-B') der Rahmenvorrichtung (37) zwischen weiteren, einander gegenüberliegenden Punkten (B, B') vergrösserbar ist.

6. Rahmenvorrichtung (37) nach einem der Ansprüche 4 oder 5, **dadurch gekennzeichnet, dass** der Reserveraum (28) für die Reserve-Lichtwellenleiter (29) um die Zentralöffnung (36a) des Gehäuserahmens (19) bzw. um die Zentralöffnung (36b) des Innrahmens (11) angeordnet ist.

7. Rahmenvorrichtung (37) nach einem der Ansprüche 1 bis 3, **dadurch gekennzeichnet, dass** der Gehäuserahmen (19) eine Ausnehmung (33) und eine Biegestelle (35) aufweist, wobei der Gehäuserahmen (19) die Zentralöffnung (36) teilweise umschliesst und mittels einer Schliessplatte (34) schliessbar ist.

8. Rahmenvorrichtung (37) nach Anspruch 7, **dadurch gekennzeichnet, dass** eine erste Diagonalachse zwischen einander gegenüberliegenden Punkten (A, A') und eine zweite Diagonalachse zwischen weiteren einander gegenüberliegenden Punkten (B, B') vergrösserbar sind.

9. Rahmenvorrichtung (37) nach einem der Ansprüche 7 oder 8, **dadurch gekennzeichnet, dass** Reserve-Lichtwellenleiter (29) der Lichtwellenleiter (28) in einem Reserveraum (28) neben der Zentralöffnung (36) spulenartig aufgewickelt sind.
